# EUROPEAN PATENT APPLICATION

(11) **EP 4 712 253 A1**
(43) Date of publication of application: **18.03.2026**
(21) Application number: 24864540.0
(22) Date of filing: 05.09.2024
(51) Int. Cl.: H01M 50/548

(54) **BATTERY CELL MANUFACTURING METHOD, BATTERY CELL, BATTERY, AND ELECTRIC DEVICE**

(30) Priority: 13.09.2023 CN 202311181007
(71) Applicant: Contemporary Amperex Technology Co., Limited, Ningde, Fujian 352100 (CN)
(72) Inventor: WU, Kai, Ningde, Fujian 352100 (CN); WU, Yu, Ningde, Fujian 352100 (CN); LUO, Yan, Ningde, Fujian 352100 (CN); CHEN, Long, Ningde, Fujian 352100 (CN); CAO, Mengkai, Ningde, Fujian 352100 (CN); CHEN, Xinxiang, Ningde, Fujian 352100 (CN); ZHENG, Yulian, Ningde, Fujian 352100 (CN); WANG, Peng, Ningde, Fujian 352100 (CN)
(74) Representative: Ziebig Hengelhaupt Intellectual Property Attorneys Patentanwaltskanzlei PartGmbB
(86) International application number: PCT/CN2024/117246
(87) International publication number: WO 2025/055820

(57) **Abstract**

Disclosed are a method for manufacturing a battery cell (20), a battery cell (20), a battery (100), and an electric apparatus. The method for manufacturing a battery cell (20) includes: connecting an electrode lead-out member (221) of a bare cell (22) to an electrode component (25); bending the connected electrode lead-out member (221) to allow the bare cell (22) to enter an accommodating space (212) of a housing (21) through an opening (2121), the opening (2121) of the housing (21) being a side with the largest area of the housing (21); and connecting a top cover (24) to the housing (21) to close the opening (2121). The bare cell (22) of the battery cell (20) can be conveniently installed in situations where the electrode component (25) is not disposed on the top cover (24).

## Description

This The present application claims priority to Chinese Patent Application No. 2023111810073, filed on September 13, 2023, entitled "METHOD FOR MANUFACTURING BATTERY CELL, BATTERY CELL, BATTERY, AND ELECTRIC APPARATUS", the entire contents of which are incorporated herein by reference.

### TECHNICAL FIELD

The present disclosure relates to the technical field of batteries, and particularly, to a method for manufacturing a battery cell, a battery cell, a battery, and an electric apparatus.

### BACKGROUND

Due to advantages, such as high energy density, high power density, multiple cycles of use, and long storage time, rechargeable batteries have been widely applied in electric vehicles, mobile devices, or electric tools. Existing battery cells generally include a bare cell, a housing, a top cover, and an electrode component. The electrode component is disposed on the top cover. The cell forms an electrical connection with the electrode component when connected to the top cover and is installed into the housing along with the top cover. However, when the electrode component is not disposed on the top cover, the bare cell is difficult to install.

### SUMMARY

According to a first aspect, the present application provides a battery cell. The battery cell includes a bare cell, a top cover, and a housing, the housing having an opening, the housing being connected to the top cover, the top cover covering the opening to form an accommodating space with the housing, the bare cell being disposed in the accommodating space, the opening being located on a side of the housing with the largest area, a side of the bare cell being provided with an electrode lead-out member, the housing including an electrode component or the housing being connected to an electrode component, the electrode lead-out member being connected to the electrode component, and the electrode lead-out member being a bent structure.

By the above method, the bare cell may be installed into the housing through the opening located on the side of the housing with the largest area and well connected to the electrode component located on the housing, so that the battery cell may be efficiently assembled. Meanwhile, the electrode lead-out member is of the bent structure, so that the electrode lead-out member is more compact and occupies less space, which facilitates reducing a gap between the bare cell and the housing, and improves energy density of the battery cell per unit volume.

In some embodiments, the electrode lead-out member includes a tab, the tab is disposed on one side of the bare cell, the tab is connected to the bare cell and the electrode component, and the tab is a bent structure.

By the above method, the bare cell can be conveniently connected to the electrode component through the tab to form a current loop.

In some embodiments, the electrode lead-out member includes a tab and a connecting piece, the tab is disposed on one side of the bare cell, one end of the connecting piece is connected to the tab, another end of the connecting piece is connected to the electrode component, and the tab and/or the connecting piece is a bent structure.

By the above method, the tab disposed on the bare cell does not need to be directly connected to the electrode component, connection manners for the tab are more diversified, and the battery cell is installed more flexibly.

In some embodiments, the connecting piece includes a first connecting portion connected to the tab and a second connecting portion connected to the electrode component, the first connecting portion is bent relative to the second connecting portion, and the tab extends between the first connecting portion and the second connecting portion.

By the above method, the tab can at least partially be located in a gap that is located between the first connecting portion and the second connecting portion and that is formed by bending the first connecting portion. The tab and the connecting piece have a compact structure, occupy less accommodating space, and the bare cell may have a higher volume proportion in the accommodating space, which facilitates improving energy density of the battery cell.

In some embodiments, the connecting piece includes a first connecting piece and a second connecting piece, one end of the first connecting piece is connected to the tab, another end of the first connecting piece is connected to the second connecting piece, one end of the second connecting piece is connected to the first connecting piece, another end of the second connecting piece is connected to the electrode component, and at least one of the tab, the first connecting piece, and the second connecting piece is a bent structure.

By the above method, the first connecting piece and the second connecting piece provide more diverse connection manners between the tab and the electrode component, and the battery cell is installed more flexibly.

In some embodiments, the housing includes a bottom plate and a plurality of side plates, the side plates extend along a periphery of the bottom plate and form the accommodating space together with the bottom plate, and at least one of the side plates is provided with the electrode component.

By the above method, the housing can well accommodate the bare cell. Additionally, the electrode component is disposed on the side plate, which better facilitates a connection between the electrode component and the tab, and a structure of the battery cell is simplified. In some embodiments, a distance between the bare cell and a side plate of the housing not provided with the electrode component ranges from 0.5 mm to 2 mm.

By the above method, a small gap may be provided between the bare cell and the side plate not provided with the electrode component, the bare cell is further defined in the accommodating space, the bare cell is more difficult to shake, and stability of the battery cell is improved. Additionally, the bare cell has a higher volume proportion in the battery cell, which facilitates an increase in energy storage capacity per unit volume of the battery cell.

In some embodiments, a support plate is disposed between the bare cell and a side plate of the housing not provided with the electrode component.

By the above method, the support plate can fill the gap between the bare cell and the side plate of the housing, so as to reduce shaking of the bare cell in the housing and enable installation of the bare cell to be more stable.

In some embodiments, the support plate includes a bottom support plate, and the bottom support plate is disposed between the bare cell and the side plate of the housing disposed opposite to the side plate provided with the electrode component.

By the above method, the bottom support plate can fill the gap between the bare cell and the side plate of the housing disposed opposite to the side plate provided with the electrode component, which facilitates reducing shaking of the bare cell in the housing and enables installation of the bare cell to be more stable.

In some embodiments, the support plate includes a side support plate, and the side support plate is disposed between the bare cell and the side plate of the housing adjacent to the side plate provided with the electrode component.

By the above method, the side support plate can fill the gap between the bare cell and the side plate of the housing adjacent to the side plate provided with the electrode component, which facilitates reducing shaking of the bare cell in the housing and enables installation of the bare cell to be more stable.

In some embodiments, the housing includes a bottom plate and a plurality of side plates, the side plates extend along a periphery of the bottom plate and form the accommodating space together with the bottom plate, one side of the side plate away from the bottom plate is connected to a flange, the flange extends from one end of the side plate away from the bottom plate outward of the accommodating space, and the top cover is connected to the flange.

By the above method, the top cover is connected to the flange of the housing, and by setting a connection position at the flange, a distance between the connection position of the top cover and the flange and the bare cell can be increased, so as to avoid damage to the bare cell due to light leakage during a connection process of the top cover and the flange. In addition, the damage to the bare cell caused by particulate matter falling into the bare cell can be reduced, thereby protecting the bare cell and improving reliability and safety of the battery cell.

In some embodiments, the side plate is connected to the bottom plate through a first transition angle, and the side plate is connected to the flange through a second transition angle.

By the above method, the first transition angle and the second transition angle can improve stability of the housing, thereby improving stability of connecting the top cover to the flange, and further protecting the bare cell.

In some embodiments, a radius of the second transition angle is less than or equal to 0.2 mm. By the above method, connection stability between the side plate and the flange is improved.

In some embodiments, the side plates are arranged around the bottom plate, the flanges are arranged around the side plates, and the flanges are connected to the top cover.

By the above method, each side plate is provided with a corresponding flange, and the top cover is connected to all flanges, so that connection positions are all located on the flanges, and protection performance for the bare cell is improved.

In some embodiments, an edge of the top cover is aligned with an edge of the flange away from the side plate.

By the above method, it is avoided that the top cover and/or the flange pierces an adjacent battery cell or a casing of a battery; and moreover, the structure of the battery cell is more compact, which facilitates subsequent series or parallel connections of a plurality of battery cells.

In some embodiments, the housing is an integrally formed structure.

By the above method, the housing is more stable, thereby improving stability of connecting the top cover to the flange of the housing.

In some embodiments, a maximum distance from the edge of the flange away from the side plate to an outer surface of the side plate is not greater than 5 mm.

By the above method, the distance between an actual connection position of the flange and the top cover and the bare cell is limited, and damage to the bare cell due to laser spillage or falling of particulate matter is reduced.

According to a second aspect, the present application provides a battery. The battery includes the battery cell in the above embodiments.

According to a third aspect, the present application provides an electric apparatus. The electric apparatus includes the battery in the above embodiments. The battery is configured to supply power to the electric apparatus.

According to a fourth aspect, the present application provides a method for manufacturing a battery cell. The method for manufacturing the battery cell includes: connecting an electrode lead-out member of a bare cell to an electrode component; bending the connected electrode lead-out member to allow the bare cell to enter an accommodating space of a housing through an opening, the opening of the housing being a side of the housing with the largest area; and connecting a top cover to the housing to close the opening.

By the above method, the bare cell can form a stable electrical connection with the electrode component, and can be directly installed into the accommodating space of the housing by bending the electrode lead-out member. The bare cell can be simply installed with the electrode component disposed on the housing, and the battery cell can be efficiently assembled.

In some embodiments, the housing includes a bottom plate and a plurality of side plates, the side plates extend along a periphery of the bottom plate and form the accommodating space together with the bottom plate, the opening is disposed opposite to the bottom plate, and the electrode component is the bottom plate or the side plate of the housing.

By the above method, the tab is directly connected to the bottom plate or the side plate, a connection structure is simple, and production is facilitated. Additionally, the method further facilitates reducing structures between the bare cell and the housing, and a volume proportion of the bare cell in the accommodating space is improved, thereby improving energy density of the battery cell. In some embodiments, the housing includes a bottom plate and a plurality of side plates, the side plates extend along a periphery of the bottom plate and form the accommodating space together with the bottom plate, the opening is disposed opposite to the bottom plate, and the electrode component is disposed on at least one side plate.

By the above method, the electrode component is disposed on the side plate, which better facilitates a connection between the electrode component and the tab, and a structure of the battery cell is simplified.

In some embodiments, the electrode lead-out member includes a tab, and the step of connecting the electrode lead-out member of the bare cell to the electrode component includes: welding the tab of the bare cell to the electrode component.

By the above method, the tab may be conveniently connected to the electrode component through the bare cell to form a current loop.

In some embodiments, the electrode lead-out member includes a tab and a connecting piece, and the step of connecting the electrode lead-out member of the bare cell to the electrode component includes: welding the tab of the bare cell to the connecting piece; and welding the connecting piece to the electrode component.

By the above method, the tab does not need to be directly connected to the electrode component, the tab may be connected to the electrode component more flexibly, and the battery cell is installed flexibly. Additionally, the connecting piece can share a tensile force between the tab and the electrode component, so that the tab is not easily broken.

In some embodiments, the electrode lead-out member includes a tab, a first connecting piece, and a second connecting piece, and the step of connecting the electrode lead-out member of the bare cell to the electrode component includes: welding the tab of the bare cell to the first connecting piece; welding the first connecting piece to the second connecting piece; and welding the second connecting piece to the electrode component.

By the above method, the tab is connected to the electrode component through the first connecting piece and the second connecting piece, and the first connecting piece and the second connecting piece can better share the tensile force between the tab and the electrode component, so that the tab is not easily broken. Additionally, connection manners between the tab and the electrode component can be performed by a plurality of steps, and the battery cell is installed more flexibly.

In some embodiments, the housing includes a bottom plate, the opening is disposed opposite to the bottom plate, and before the step of connecting the electrode lead-out member of the bare cell to the electrode component, the method further includes a step of: disposing the bare cell and the bottom plate at a preset angle.

By the above method, the preset angle enables the bare cell and the electrode component to have a better welding posture, so that welding quality between the bare cell and the electrode component is higher. Additionally, the preset angle enables the bare cell to be located at a position where bending is better facilitated, which improves efficiency of installing the bare cell into the accommodating space.

In some embodiments, the preset angle is not less than 45° and not greater than 135°.

By the above method, the bare cell can have a better welding posture when welded to the electrode component, welding heat input is more uniform, base materials are more fully fused, probability of a cold solder joint is reduced, and welding seam quality is higher.

In some embodiments, in the step of connecting the electrode lead-out member of the bare cell to the electrode component, the bare cell is perpendicular to the bottom plate.

By the above method, the contact area between the bare cell and the electrode component is larger, a welding posture is good, welding heat input is more uniform, base materials are more fully fused, and welding seam quality is higher.

In some embodiments, before the step of connecting the top cover to the housing to close the opening, the method further includes: placing a support plate between at least one side of the bare cell not provided with the electrode lead-out member and the housing.

By the above method, the support plate can fill the gap between the bare cell and the side plate of the housing, so as to reduce shaking of the bare cell in the housing and enable installation of the bare cell to be more stable.

In some embodiments, a side of the housing facing the top cover is provided with a flange, the flange extends in a direction away from the accommodating space, and the step of connecting the top cover to the housing to close the opening includes: covering the opening with the top cover and welding the top cover to the flange.

By the above method, a distance between the connection position of the top cover and the flange and the cell is increased, which facilitates reducing probability of damage to the cell due to light leakage during a connection process of the top cover and the flange. In addition, the damage to the cell caused by particulate matter falling into the cell can be reduced, thereby protecting the cell and improving reliability and safety of the battery cell.

In some embodiments, after the step of covering the opening with the top cover and welding the top cover to the flange, the method further includes: cutting the welded flange and the top cover to remove an edge of the flange away from the accommodating space and remove an edge of the top cover.

By the above method, space occupied by the flange and the top cover can be reduced, thereby reducing space occupied by the battery cell.

In some embodiments, before the step of welding the electrode lead-out member of the bare cell to the electrode component, the method further includes: wrapping an insulating film around an outer surface of the bare cell.

By the above method, the outer surface of the bare cell has better insulation property, the insulating film protects the outer surface of the bare cell, and probability of scratches or damage to the bare cell when installed into the housing is reduced.

The above description is only an overview of technical solutions of the present application. To better understand technical means of the present application, implement according to contents of the specification, and to make the above and other purposes, features, and advantages of the present application more apparent and understandable, specific embodiments of the present application are provided below.

### BRIEF DESCRIPTION OF DRAWINGS

By reading detailed description of preferred embodiments below, various other advantages and benefits will become clear to those of ordinary skill in the art. Drawings are only for the purpose of illustrating the preferred embodiments and are not considered as limiting the present application. Moreover, throughout all drawings, identical components are denoted by identical reference numerals. In the drawings:
FIG. 1 is a schematic structural diagram of a vehicle according to one or more embodiments;
FIG. 2 is an exploded schematic diagram of a battery according to one or more embodiments;
FIG. 3 is a schematic diagram of an exploded view of a battery cell according to one or more embodiments;
FIG. 4 is a first schematic structural diagram of a battery cell according to one or more embodiments;
FIG. 5 is an enlarged schematic diagram of A in FIG. 4;
FIG. 6 is schematic diagram of another implementation of A in FIG. 4;
FIG. 7 is a second schematic structural diagram of a battery cell according to one or more embodiments;
FIG. 8 is a cross-sectional schematic diagram along B-B in FIG. 7;
FIG. 9 is a cross-sectional schematic diagram along C-C in FIG. 7;
FIG. 10 is a third schematic structural diagram of a battery cell according to one or more embodiments;
FIG. 11 is an enlarged schematic diagram of D in FIG. 10;
FIG. 12 is a fourth schematic structural diagram of a battery cell according to one or more embodiments;
FIG. 13 is an enlarged schematic diagram of E in FIG. 12;
FIG. 14 is a fifth schematic structural diagram of a battery cell according to one or more embodiments;
FIG. 15 is a cross-sectional view of a battery cell according to one or more embodiments;
FIG. 16 is a schematic flowchart according to one or more embodiments;
FIG. 17 is another schematic flowchart according to one or more embodiments;
FIG. 18 is still another schematic flowchart according to one or more embodiments; and
FIG. 19 is yet another schematic flowchart according to one or more embodiments.

Reference numerals in detailed description are as follows:
1000, vehicle; 200, controller; 300, motor; 100, battery; 10, casing; 11, first portion; 12, second portion;
20, battery cell; 21, housing; 212, accommodating space; 2121, opening; 213, bottom plate; 214, side plate; 2141, flange; 22, bare cell; 221, electrode lead-out member; 2211, tab; 2212, connecting piece; 2212a, first connecting portion; 2212b, second connecting portion; 2212c, first connecting piece; 2212d, second connecting piece; 23, support plate; 231, bottom support plate; 232, side support plate; 24, top cover; and 25, electrode component.

### DESCRIPTION OF EMBODIMENTS

Embodiments of technical solutions of the present application are described in detail below with reference to drawings. The following embodiments are only used to more clearly illustrate the technical solutions of the present application and thus serve as examples only, rather than limiting the protection scope of the present application.

Unless otherwise defined, all technical and scientific terms used herein have the same meaning as commonly understood by those skilled in the technical field of the present application; the terms used herein are only for the purpose of describing specific embodiments and are not intended to limit the present application; the terms "including" and "having" in the specification, claims, and the above description of the drawings of the present application, as well as any variations thereof, are intended to cover non-exclusive inclusion.

In the description of the embodiments of the present application, the technical terms such as "first" and "second" are only used to distinguish different objects and are not to be understood as indicating or implying relative importance or implicitly indicating the number, specific order, or primary-secondary relationship of the indicated technical features. In the description of the embodiments of the present application, unless explicitly specified otherwise, the term "a plurality of" refers to two or more (including two), and similarly, "a plurality of groups" refers to two or more groups (including two groups), and "a plurality of pieces" refers to two or more pieces (including two pieces).

Reference to "an embodiment" herein means that a particular feature, structure or characteristic described in connection with the embodiment can be included in at least one embodiment of the present application. This phrase appearing in various places in this specification does not necessarily refer to the same embodiment or an independent or alternative embodiment that is exclusive of other embodiments. Those skilled in the art explicitly and implicitly understand that the embodiments described herein may be combined with other embodiments.

In the description of the embodiments of the present application, the term "and/or" is only an associative relationship describing associated objects, indicating that three relationships may exist. For example, A and/or B may indicate: presence of A alone, presence of both A and B, and presence of B alone. In addition, the character "/" herein generally indicates that the associated objects before and after are in an "or" relationship.

In the description of the embodiments of the present application, the orientation or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientation or positional relationships shown in the drawings, only for the convenience of describing the embodiments of the present application and simplifying the description, and do not indicate or imply that the referred device or element has to have a specific orientation, be constructed and operated in a specific orientation, and thus cannot be understood as limiting the embodiments of the present application.

In the description of the embodiments of the present application, unless explicitly specified and defined otherwise, the technical terms "install", "interconnect", "connect", "fix," and the like are to be understood in a broad sense, for example, as a fixed connection, a detachable connection, or an integral formation; as a mechanical connection or an electrical connection; as a direct connection or an indirect connection through an intermediate medium; or as an internal communication between two elements or an interaction relationship between two elements. Those of ordinary skill in the art can understand the specific meanings of the above terms in the embodiments of the present application based on specific circumstances.

Currently, with the development of market trends, the application of power batteries is becoming increasingly widespread. Power batteries are not only used in energy storage power systems such as hydroelectric, thermal, wind, and solar power stations but are also widely applied in electric vehicles such as electric bicycles, electric motorcycles, and electric vehicles, as well as in a plurality of fields military equipment and aerospace fields. With continuous expansion of application fields of the power batteries, the market demand for the power batteries is also increasing.

During an assembly process of a battery cell, a bare cell needs to be installed into a housing, and the bare cell forms an electrical connection with an electrode component. In related technologies, the electrode component is disposed on a top cover, and the bare cell forms an electrical connection with the electrode component when connected to the top cover and is installed into the housing along with the top cover. However, when the electrode component is not disposed on the top cover, the bare cell cannot form an electrical connection with the electrode component when connected to the top cover, and welding postures of the bare cell and the electrode component change, so that installation is difficult to complete.

Based on the above considerations, to solve the technical problems existing in battery cells in a related art, the present application provides a method for manufacturing a battery cell. By the method for manufacturing a battery cell, a bare cell of a battery cell can be conveniently installed in situations where an electrode component is disposed on a housing and a top cover is located on a side with the largest area of the bare cell.

The present application provides an electric apparatus. The electric apparatus includes, but is not limited to, mobile phones, tablets, computers, electric toys, electric tools, electric bicycles, electric vehicles, ships, spacecraft, and the like. Electric toys may include fixed or mobile electric toys, such as game consoles, electric car toys, electric ship toys, and electric airplane toys, while spacecraft may include airplanes, rockets, space shuttles, and spaceships, and the like. The electric apparatus may include a battery. The electric apparatus may be powered by the battery to implement corresponding functions of the electric apparatus.

For ease of description, the following embodiments describe by using an example in which an electric apparatus according to an embodiment of the present application is a vehicle.

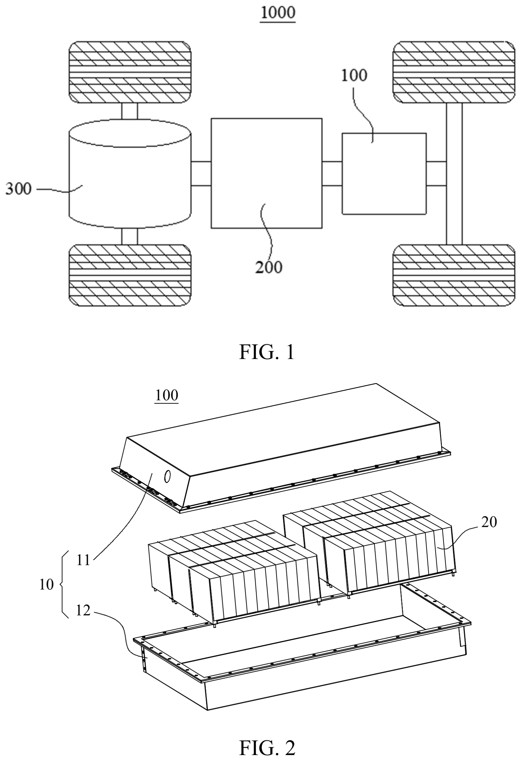

Refer to FIG. 1, which is a schematic structural diagram of a vehicle according to one or more embodiments.

A vehicle 1000 may be a fuel vehicle, a gas vehicle, or a new energy vehicle. The new energy vehicle may be a pure electric vehicle, a hybrid vehicle, or an extended-range vehicle, and the like. The vehicle 1000 is provided with a battery 100 internally, and the battery 100 may be disposed at a bottom, head, or tail of the vehicle 1000. The battery 100 may be configured to power the vehicle 1000, for example, the battery 100 may serve as an operating power supply of the vehicle 1000. The vehicle 1000 may further include a controller 200 and a motor 300. The controller 200 is configured to control the battery 100 to supply power to the motor 300, for example, for operating power demands during starting, navigation, and driving of the vehicle 1000.

In some embodiments of the present application, the battery 100 may not only serve as an operating power supply of the vehicle 1000 but also as a driving power supply of the vehicle 1000, replacing or partially replacing fuel or natural gas to provide driving power for the vehicle 1000.

To improve performance of the electric apparatus, the present application further provides a battery 100. Please refer to FIG. 2, which is an exploded diagram of a battery 100 according to some embodiments of the present application. A shape of the battery 100 includes, but is not limited to, a rectangular shape. In other embodiments, the shape of the battery 100 may alternatively be cylindrical, rectangular, or any other shapes. An energy storage apparatus is a type of battery 100, which can be configured for power grids, or for household, commercial and other scenarios, to store and/or release electrical energy. The energy storage apparatus may be an energy storage cabinet, an energy storage container, or the like.

In some embodiments, the battery 100 may include a casing 10 and a battery cell 20, and the battery cell 20 is accommodated in the casing 10. The casing 10 is configured to provide an accommodating space for the battery cell 20, and the casing 10 may adopt various structures. In some embodiments, the casing 10 may include a first portion 11 and a second portion 12, the first portion 11 and the second portion 12 cover each other, and the first portion 11 and the second portion 12 together define an accommodating space for accommodating the battery cell 20. The second portion 12 may be of a hollow structure with an opening at one end, the first portion 11 may be a plate-like structure, and the first portion 11 covers an opening side of the second portion 12, so that the first portion 11 and the second portion 12 together define the accommodating space; alternatively, both the first portion 11 and the second portion 12 may be of hollow structures with an opening on one side, and an opening side of the first portion 11 covers an opening side of the second portion 12. Certainly, the casing 10 formed by the first portion 11 and the second portion 12 may be of various shapes, such as a cylinder, and a cuboid.

In the battery 100, there may be a plurality of battery cells 20, and the plurality of battery cells 20 may be connected in series, in parallel, or in a mixed connection. The mixed connection refers to the plurality of battery cells 20 having both series and parallel connections. The plurality of battery cells 20 may be directly connected in series, in parallel, or in a mixed connection, and then an entirety of the plurality of battery cells 20 is accommodated in the casing 10; or certainly, the battery 100 may alternatively be formed by connecting the plurality of battery cells 20 in series, in parallel, or in a mixed connection to form a battery module, and then a plurality of battery modules are connected in series, in parallel, or in a mixed connection to form an entirety which is accommodated in the casing 10. The battery 100 may alternatively include other structures, for example, the battery 100 may include a busbar component for achieving electrical connections between the plurality of battery cells 20.

Each battery cell 20 may be a secondary battery or a primary battery, or may alternatively be a lithium-sulfur battery, a sodium-ion battery, or a magnesium-ion battery, but is not limited thereto. The battery cell 20 may be in a shape of a cylinder, a flat body, a cuboid, or other shapes.

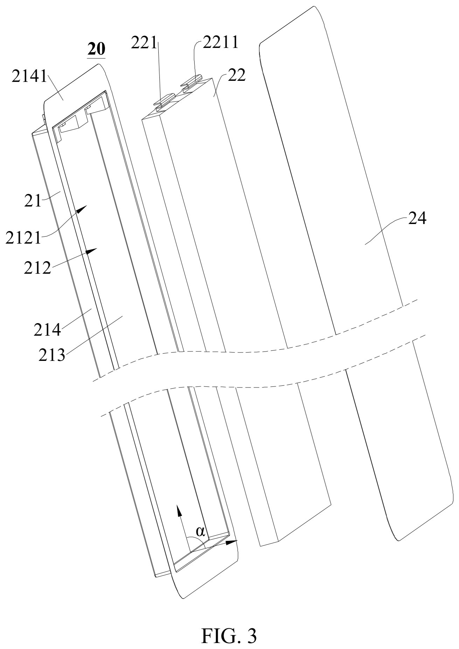

The battery cell 20 includes a bare cell, and a method for manufacturing a bare cell includes laminating and winding, that is, the battery 100 is classified into a laminated battery and a wound battery. The laminated battery has a uniform current collection effect, lower internal resistance, and high specific power, but has an extremely high requirement on mold precision, high device investment, complex processes, and low production efficiency. The wound battery is simple to manufacture, and has moderate requirements on equipment precision in processes of sheet making and assembling, high production efficiency, and lower costs. In terms of performance, the wound battery has excellent high-and-low temperature performance, charges quickly, has an ultra-long lifespan, a stable high output voltage, a firm structure, and strong shock resistance. Refer to FIG. 3, which is a schematic diagram of an exploded view structure of a battery cell according to one or more embodiments. The battery cell 20 refers to a smallest unit constituting a battery. The battery cell 20 includes a top cover 24, a housing 21, a bare cell 22, and other functional components.

The top cover 24 refers to a component that covers an opening 2121 of a housing 21 to isolate an internal environment of the battery cell 20 from an external environment. A shape of the top cover 24 may be adapted to a shape of the housing 21 to fit the housing 21. Optionally, the top cover 24 may be made of a material with certain hardness and strength (for example, aluminum alloy), and in this way, the top cover 24 is not easily deformed when extruded or collided, so that the battery cell 20 can have higher structural strength, and safety performance is improved. The material of the top cover 24 may alternatively be varied, including, but not limited to, copper, iron, aluminum, stainless steel, aluminum alloy, plastic, and the like. In some embodiments, the top cover 24 may alternatively be provided with a vent valve component configured to release an internal pressure when the internal pressure or temperature of the battery cell 20 reaches a threshold. In some embodiments, an insulating member may be disposed on an inner side of the top cover 24. The insulating member may be configured to isolate an electrical connection component in the housing 21 from the top cover 24, so as to reduce a risk of short circuits. For example, the insulating member may be plastic, rubber, and the like.

The housing 21 is a component configured to fit the top cover 24 to form the internal environment of the battery cell 20, where the formed internal environment may be configured to accommodate the bare cell 22, an electrolyte, and other components. The housing 21 and the top cover 24 may be independent components, an opening 2121 may be disposed on the housing 21, and at the opening 2121, the top cover 24 covers the opening 2121 to form the internal environment of the battery cell 20. Without limitation, the top cover 24 and the housing 21 may alternatively be integrated, specifically, the top cover 24 and the housing 21 may form a common connection surface before other components are inserted into the housing, and when an interior of the housing 21 needs to be sealed, the top cover 24 covers the housing 21. The housing 21 may have various shapes and sizes, such as a cuboid, a cylinder, and a hexagonal prism. Specifically, the shape of the housing 21 may be determined based on a specific shape and size of the bare cell 22. A material of the housing 21 may be varied, including, but not limited to, copper, iron, aluminum, stainless steel, aluminum alloy, plastic, and the like.

The bare cell 22 is a component in the battery cell 20 where electrochemical reactions occur. The housing 21 may contain one or more bare cells 22. The bare cell 22 is mainly formed by winding or laminating a positive electrode plate and a negative electrode plate, and a separator is typically provided between the positive electrode plate and the negative electrode plate. Portions of the positive electrode plate and the negative electrode plate having an active material constitute a cell body of the bare cell 22, and portions of the positive electrode plate and the negative electrode plate without the active material respectively form tabs 2211. During charging and discharging processes of the battery cell 20, a positive active material and a negative active material react with an electrolyte, and the tab 2211 is connected to the electrode component 25 to form a current loop.

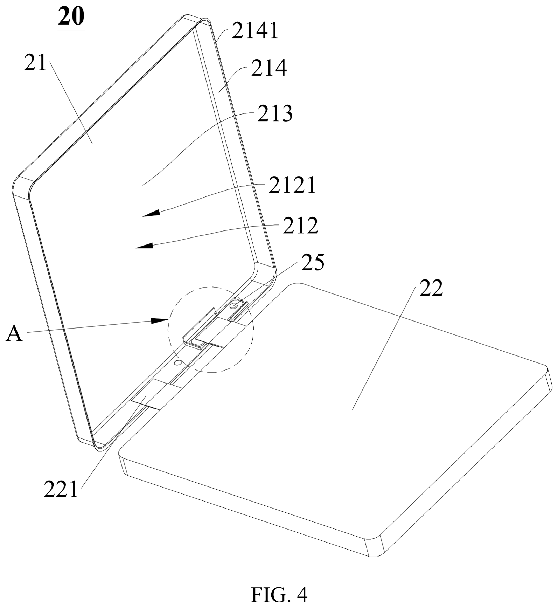

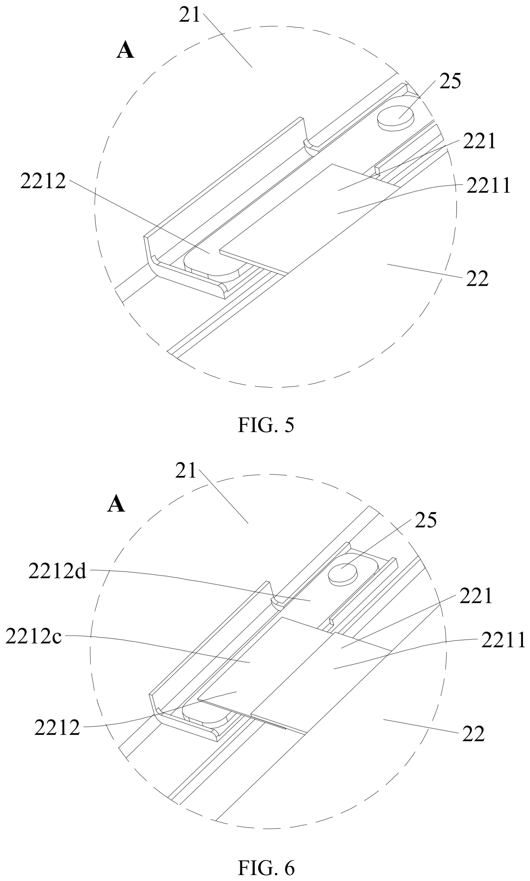

Referring to FIG. 4 to FIG. 6, FIG. 4 is a first schematic structural diagram of a battery cell according to one or more embodiments; FIG. 5 is an enlarged schematic diagram of A in FIG. 4; and FIG. 6 is a schematic diagram of another implementation of A in FIG. 4. In combination with FIG. 1 to FIG. 3, according to some embodiments of the present application, the present application also provides a battery cell 20. The battery cell 20 includes a bare cell 22, a top cover 24, and a housing 21. The housing 21 has an opening 2121. The housing 21 is connected to the top cover 24, the top cover 24 covers the opening 2121 to form an accommodating space 212, the bare cell 22 is disposed in the accommodating space 212, the opening 2121 is located on a side of the housing 21 with the largest area, a side of the bare cell 22 is provided with an electrode lead-out member 221, the housing 21 includes an electrode component 25 or the housing 21 is connected to an electrode component 25, the electrode lead-out member 221 is connected to the electrode component 25, and the electrode lead-out member 221 is a bent structure.

The opening 2121 being located on the side of the housing 21 with the largest area refers to a plane where the opening 2121 is located being a plane with the largest area on the outer surface of the housing 21. The area of the plane where the opening 2121 is located on the outer surface of the housing 21 is the same as the area of the surface of the top cover 24 away from the housing 21. The electrode lead-out member 221 is conductive. The electrode component 25 may be integrally formed with the housing 21. The electrode component 25 may alternatively be separated from the housing 21, and is connected to the housing 21. A bending angle of the electrode lead-out member 221 includes, but is not limited to, 90°, 180°, and the like.

By the above method, the bare cell 22 can be installed into the housing 21 through the opening 2121 located on the side of the housing 21 with the largest area, and is well connected to the electrode component 25 located on the housing 21, so that the battery cell 20 can be efficiently assembled. Additionally, the electrode lead-out member 221 is of the bent structure, so that the electrode lead-out member 221 is more compact and occupies less space, which facilitates reducing a gap between the bare cell 22 and the housing 21, and improves energy density of the battery cell 20 per unit volume.

According to some embodiments of the present application, the electrode lead-out member 221 includes a tab 2211, the tab 2211 is disposed on one side of the bare cell 22, the tab 2211 is connected to the bare cell 22 and the electrode component 25, and the tab 2211 is a bent structure.

By the above method, the bare cell 22 can be conveniently connected to the electrode component 25 through the tab 2211 to form a current loop.

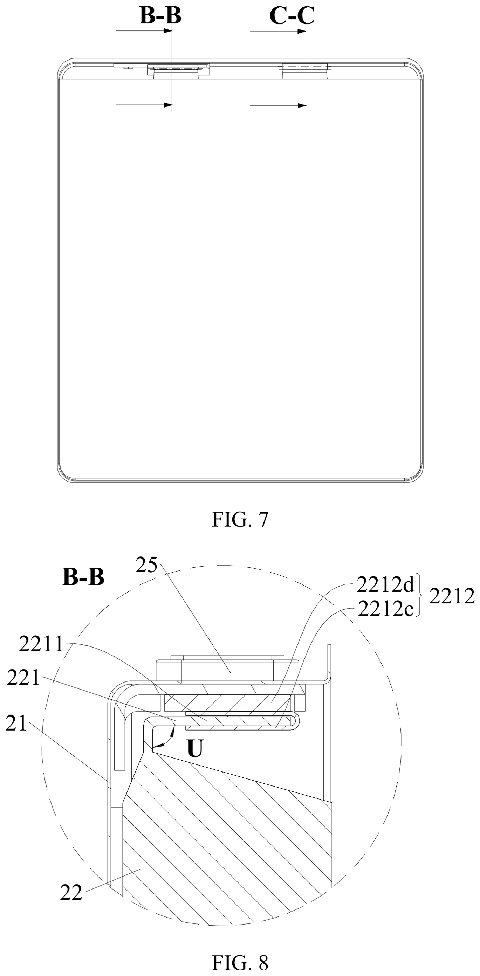

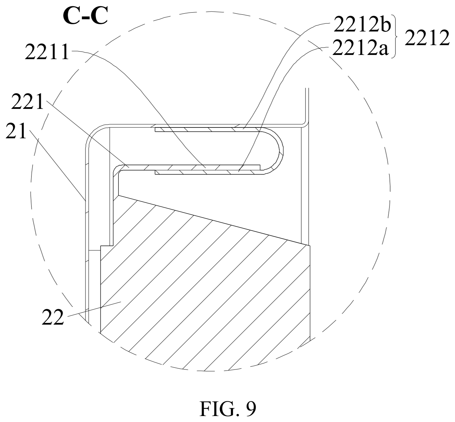

Referring to FIG. 7 to FIG. 9, FIG. 7 is a second schematic structural diagram of a battery cell according to one or more embodiments; FIG. 8 is a cross-sectional schematic diagram along B-B in FIG. 7; and FIG. 9 is a cross-sectional schematic diagram along C-C in FIG. 7. According to some embodiments of the present application, the electrode lead-out member 221 further includes a tab 2211 and a connecting piece 2212, the tab 2211 is disposed on one side of the bare cell 22, one end of the connecting piece 2212 is connected to the tab 2211, another end of the connecting piece 2212 is connected to the electrode component 25, and the tab 2211 and/or the connecting piece 2212 is a bent structure.

Specifically, the connecting piece 2212 is made of a conductive material. A shape of the connecting piece 2212 may be set according to actual conditions, for example, the connecting piece 2212 may be in a form of a thin sheet. A bending condition of the tab 2211 and/or the connecting piece 2212 may be set according to actual conditions. For example, in one specific embodiment, the tab 2211 is a bent structure. In another specific embodiment, the connecting piece 2212 is a bent structure. In still another specific embodiment, both the tab 2211 and the connecting piece 2212 are bent structures.

By the above method, the tab 2211 does not need to be directly connected to the electrode component 25, connection manners for the tab 2211 are more diversified, and the battery cell 20 is installed more flexibly.

In some embodiments, the connecting piece 2212 includes a first connecting portion 2212a connected to the tab 2211 and a second connecting portion 2212b connected to the electrode component 25, the first connecting portion 2212a is bent relative to the second connecting portion 2212b, and the tab 2211 extends between the first connecting portion 2212a and the second connecting portion 2212b.

Specifically, a gap is formed between the first connecting portion 2212a and the second connecting portion 2212b. The tab 2211 at least partially extends into the gap. The first connecting portion 2212a and the second connecting portion 2212b may be integrally formed or separately disposed.

By the above method, the tab 2211 can at least partially be located in the gap that is located between the first connecting portion 2212a and the second connecting portion 2212b and that is formed by bending the first connecting portion 2212a. The tab 2211 and the connecting piece 2212 have a compact structure, occupy less accommodating space 212, and the bare cell 22 may have a higher volume proportion in the accommodating space 212, which facilitates improving energy density of the battery cell 20.

According to some embodiments of the present application, the tab 2211 is connected to one side of the first connecting portion 2212a facing the bare cell 22.

By the above method, a connection position of the tab 2211 is flexible, and the battery cell 20 is convenient to assemble.

According to some embodiments of the present application, the connecting piece 2212 includes a first connecting piece 2212c and a second connecting piece 2212d, one end of the first connecting piece 2212c is connected to the tab 2211, another end of the first connecting piece 2212c is connected to the second connecting piece 2212d, one end of the second connecting piece 2212d is connected to the first connecting piece 2212c, another end of the second connecting piece 2212d is connected to the electrode component 25, and at least one of the tab 2211, the first connecting piece 2212c, and the second connecting piece 2212d is a bent structure.

Specifically, shapes of the first connecting piece 2212c and the second connecting piece 2212d may be set according to actual conditions. For example, the first connecting piece 2212c may be in a form of a thin sheet, and the second connecting piece 2212d may be in a form of a thin sheet. Bending conditions of the tab 2211, the first connecting piece 2212c, and the second connecting piece 2212d may be set according to actual conditions. For example, in one specific embodiment, the tab 2211 is a bent structure. In another specific embodiment, the tab 2211 and the first connecting piece 2212c are bent structures. In still another specific embodiment, the first connecting piece 2212c and the second connecting piece 2212d are bent structures.

By the above method, the first connecting piece 2212c and the second connecting piece 2212d provide more diverse connection manners between the tab 2211 and the electrode component 25, and the battery cell 20 is installed more flexibly.

According to some embodiments of the present application, the housing 21 includes a bottom plate 213 and a plurality of side plates 214. The side plates 214 extend along a periphery of the bottom plate 213 and form the accommodating space 212 together with the bottom plate 213, and at least one side plate 214 is provided with the electrode component 25.

The bottom plate 213 is a side of the housing 21 with the second largest area. The bottom plate 213 may be disposed opposite to the opening 2121. The side plate 214 may be disposed at an angle to the bottom plate 213, for example, at 90°. A quantity of the side plates 214 may be set according to actual conditions, for example, in this embodiment, there are four side plates 214. The accommodating space 212 is configured to accommodate the bare cell 22. The electrode component 25 may be disposed on one side plate 214 or on the plurality of side plates 214.

By the above method, the housing 21 can well accommodate the bare cell 22. Additionally, the electrode component 25 is disposed on the side plate 214, which better facilitates a connection between the electrode component 25 and the tab 2211, and the structure of the battery cell 20 is streamlined.

In a specific embodiment, a bending angle U of the tab 2211 ranges from 90° to 180°.

For example, 90°, 95°, 100°, 110°, 120°, 130°, 140°, 150°, 160°, 170°, and 180°.

By the above method, the tab 2211 occupies less space and has a more compact structure, which facilitates reducing a gap between the bare cell 22 and the side plate 214 provided with the electrode component 25, so that the bare cell 22 does not shake easily. Additionally, the bare cell 22 has a higher volume, which facilitates an increase in energy storage capacity per unit volume of the battery cell 20.

According to some embodiments of the present application, a distance L1 between the bare cell 22 and the side plate 214 of the housing 21 not provided with the electrode component 25 ranges from 0.5 mm to 2 mm. For example, 0.5 mm, 0.6 mm, 0.7 mm, 0.8 mm, 1 mm, 1.2 mm, 1.5 mm, and 2 mm.

By the above method, a small gap may be provided between the bare cell 22 and the side plate 214 not provided with the electrode component 25, the bare cell 22 is further defined in the accommodating space 212, the bare cell 22 is more difficult to shake, and stability of the battery cell 20 is improved. Additionally, the bare cell 22 has a higher volume proportion in the battery cell 20, which facilitates an increase in energy storage capacity per unit volume of the battery cell 20.

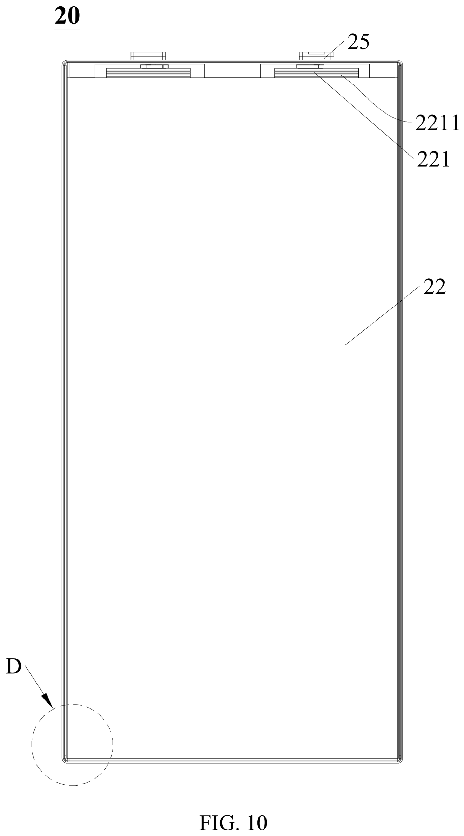

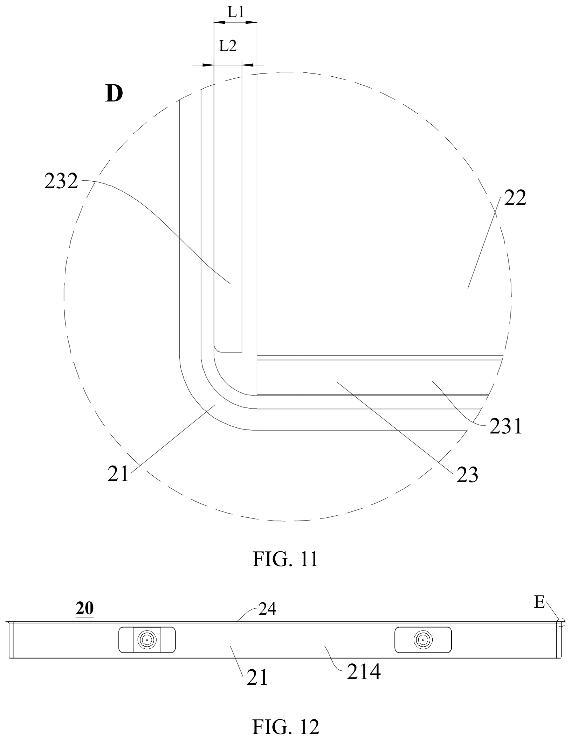

Referring to FIG. 10 and FIG. 11, FIG. 10 is a third schematic structural diagram of a battery cell according to one or more embodiments; and FIG. 11 is an enlarged schematic diagram of D in FIG. 10. In combination with FIG. 1 to FIG. 9, according to some embodiments of the present application, a support plate 23 is disposed between the bare cell 22 and the side plate 214 of the housing 21 not provided with the electrode component 25.

A quantity and a placement position of the support plate 23 may be set according to actual conditions. For example, in one embodiment, one support plate 23 is placed between the bare cell 22 and the side plate 214 of the housing 21 disposed opposite to the side plate 214 provided with the electrode component 25. In another embodiment, one support plate 23 is placed between the bare cell 22 and the side plate 214 of the housing 21 adjacent to the side plate 214 provided with the electrode component 25. In still another embodiment, one support plate 23 is placed between the bare cell 22 and the side plate 214 of the housing 21 disposed opposite to the side plate 214 provided with the electrode component 25, and another support plate 23 is placed between the bare cell 22 and the side plate 214 of the housing 21 adjacent to the side plate 214 provided with the electrode component 25.

A material of the support plate 23 may include resin, metal, and the like. Using a resin material for the support plate 23 facilitates improving cushioning performance of the support plate 23, so that the bare cell 22 is difficult to damage due to collision with the support plate 23. Using a metal material for the support plate 23 can enhance a limiting capability of the support plate 23, which can better limit movement of the bare cell 22.

By the above method, the support plate 23 can fill the gap between the bare cell 22 and the side plate 214 of the housing 21, so as to reduce shaking of the bare cell 22 in the housing 21 and enable installation of the bare cell 22 to be more stable.

According to some embodiments of the present application, the support plate 23 includes a bottom support plate 231. For example, the bottom support plate 231 is disposed between the bare cell 22 and the side plate 214 of the housing 21 disposed opposite to the side plate 214 provided with the electrode component 25.

A thickness of the bottom support plate 231 may be less than or equal to the gap between the bare cell 22 and the side plate 214 disposed opposite to the side plate 214 provided with the electrode component 25.

By the above method, the bottom support plate 231 can fill the gap between the bare cell 22 and the side plate 214 of the housing 21 disposed opposite to the side plate 214 provided with the electrode component 25, which facilitates reducing shaking of the bare cell 22 in the housing 21 and enables installation of the bare cell 22 to be more stable.

According to some embodiments of the present application, the support plate 23 includes a side support plate 232, and the side support plate 232 is disposed between the bare cell 22 and the side plate 214 of the housing 21 adjacent to the side plate 214 provided with the electrode component 25.

A thickness of the side support plate 232 may be less than or equal to the gap between the bare cell 22 and the side plate 214 of the housing 21 adjacent to the side plate 214 provided with the electrode component 25.

By the above method, the side support plate 232 can fill the gap between the bare cell 22 and the side plate 214 of the housing 21 adjacent to the side plate 214 provided with the electrode component 25, which facilitates reducing shaking of the bare cell 22 in the housing 21 and enables installation of the bare cell 22 to be more stable.

Continuing to refer to FIG. 1 to FIG. 11, according to some embodiments of the present application, a thickness L2 of the support plate 23 is less than or equal to a distance L1 between the bare cell 22 and the side plate 214 of the housing 21 not provided with the electrode component 25. The thickness L2 of the support plate 23 may range from 0.1 mm to 1.5 mm. For example, 0.1 mm, 0.2 mm, 0.3 mm, 0.5 mm, 0.8 mm, 1 mm, 1.2 mm, and 1.5 mm.

By the above method, the support plate 23 can well fill the gap between the bare cell 22 and the side plate 214 of the housing 21 not provided with the electrode component 25. Additionally, a smaller thickness of the support plate 23 facilitates installing the support plate 23 between the bare cell 22 and the side plate 214 of the housing 21 not provided with the electrode component 25, which improves assembly efficiency of the battery cell 20.

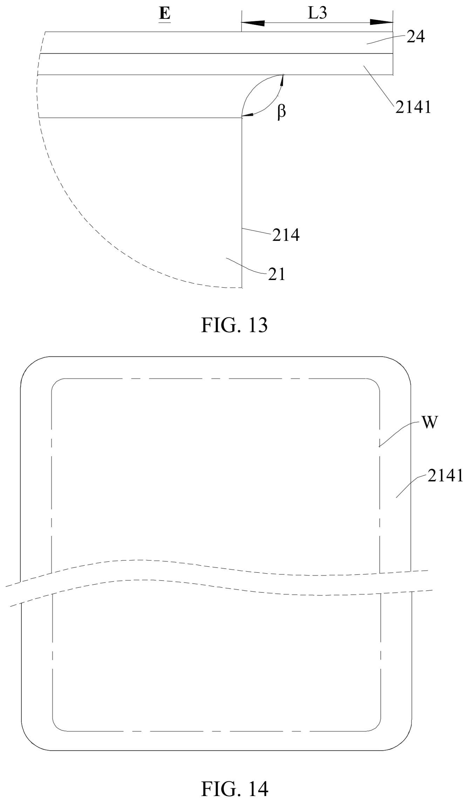

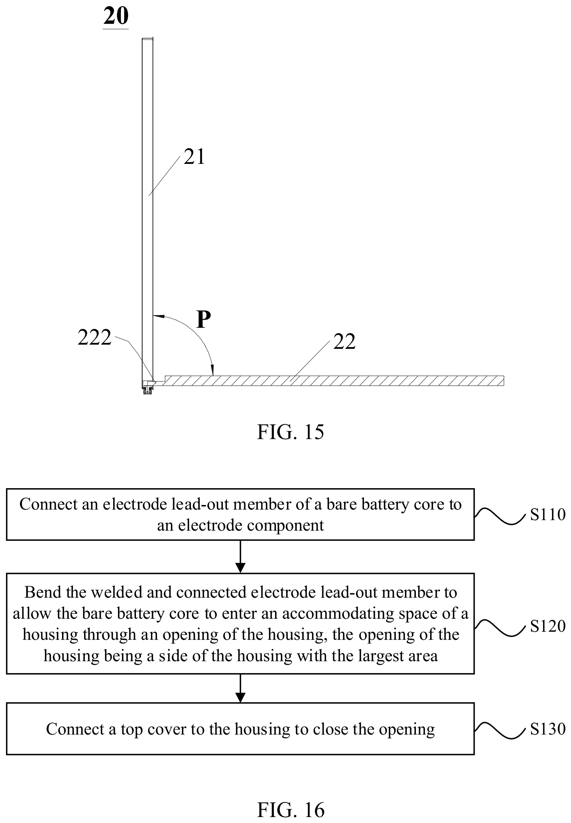

Referring to FIG. 12 to FIG. 15, FIG. 12 is a fourth schematic structural diagram of a battery cell according to one or more embodiments; FIG. 13 is an enlarged schematic diagram of E in FIG. 12; FIG. 14 is a fifth schematic structural diagram of a battery cell according to one or more embodiments; and FIG. 15 is a cross-sectional view of a battery cell according to one or more embodiments. According to some embodiments of the present application, the housing 21 includes a bottom plate 213 and a plurality of side plates 214, the side plates 214 extend along a periphery of the bottom plate 213 and form the accommodating space 212 together with the bottom plate 213, one side of the side plate 214 away from the bottom plate 213 is connected to a flange 2141, the flange 2141 extends from one end of the side plate 214 away from the bottom plate 213 outward of the accommodating space 212, and the top cover 24 is connected to the flange 2141.

Specifically, the housing 21 may have a bottom plate 213 and four side plates 214. One side of the side plate 214 away from the bottom plate 213 is connected to the flange 2141. The flange 2141 and the side plate 214 may be independent components. Alternatively, the flange 2141 and the side plate 214 may be integrally formed. The flange 2141 extends from one end of the side plate 214 away from the bottom plate 213, and the flange 2141 extends outward of the accommodating space 212, so that the flange 2141 is located on an outer periphery of the side plate 214.

A shape of the flange 2141 may fit a shape of the top cover 24. For example, when the top cover 24 is a flat plate, the flange 2141 may be set as a flat plate parallel to the top cover 24. The top cover 24 may be connected to one end of the flange 2141 away from the housing 21.

By the above method, the top cover 24 is connected to the flange 2141 of the housing 21, and by setting a connection position at the flange 2141, a distance between the connection position of the top cover 24 and the flange 2141 and the bare cell 22 can be increased, so as to avoid damage to the bare cell 22 due to light leakage during a connection process of the top cover 24 and the flange 2141. In addition, the damage to the bare cell 22 caused by particulate matter falling into the bare cell 22 can be reduced, thereby protecting the bare cell 22 and improving reliability and safety of the battery cell 20.

According to some embodiments of the present application, the side plate 214 is connected to the bottom plate 213 through a first transition angle α, and the side plate 214 is connected to the flange 2141 through a second transition angle β.

Specifically, the side plate 214 is connected to the bottom plate 213 through the first transition angle α, so that the side plate 214 and the bottom plate 213 are disposed at an angle, and stability and reliability of the housing 21 are improved. Different angles of the first transition angle α result in different sizes and shapes of the accommodating space 212. The angle of the first transition angle α may be greater than 0° and less than 180°, for example, the angle of the first transition angle α may be 30°, 60°, 90°, 120°, and 138°. When the angle of the first transition angle α is 90°, the side plate 214 is disposed perpendicular to the bottom plate 213. The size and shape of the accommodating space 212 and the angle of the first transition angle α are determined according to actual needs and are not limited herein.

The side plate 214 is connected to the flange 2141 through the second transition angle β, so that the side plate 214 and the flange 2141 are disposed at an angle, stability and reliability of the flange 2141 are improved, and stability and reliability of the housing 21 are improved. The angle of the second transition angle β may alternatively be greater than 0° and less than 180°, for example, the angle of the second transition angle β may be 30°, 60°, 90°, 120°, and 138°. When the angle of the second transition angle β is 90°, the side plate 214 is disposed perpendicular to the flange 2141. When the flange 2141 is disposed parallel to the bottom plate 213, in this case, the angle of the second transition angle β is the same as the angle of the first transition angle α.

By the above method, the first transition angle α and the second transition angle β can improve stability of the housing 21, thereby improving stability of connecting the top cover 24 to the flange 2141, and further protecting the bare cell 22.

According to some embodiments of the present application, a radius R of the second transition angle β is less than or equal to 0.2 mm. The radius R of the second transition angle β may include, but is not limited to, 0.091 mm, 0.1 mm, 0.15 mm, 0.17 mm, and 0.2 mm, and the like. By the above method, connection stability between the side plate 214 and the flange 2141 can be increased.

According to some embodiments of the present application, the side plates 214 are arranged around the bottom plate 213, the flanges 2141 are arranged around the side plates 214, and the flanges 2141 are connected to the top cover 24.

Specifically, the side plates 214 form the accommodating space 212 around the bottom plate 213. When the housing 21 is a cuboid, there are four side plates 214. When the housing 21 is a cylinder, there may be one side plate 214 arranged annularly. When the housing 21 is a hexagonal prism, there are six side plates 214. The quantity of the side plates 214 may be determined according to the shape of the housing 21 and is not limited herein.

Each side plate 214 is provided with a corresponding flange 2141. The flange 2141 varies with the quantity and shape of the side plates 214. When the housing 21 is a cuboid, there are four side plates 214, and there may be four flanges 2141. When the housing 21 is a cylinder, there may be one side plate 214 arranged annularly, and there may be one flange 2141 arranged annularly. In some other embodiments, the housing 21 is not limited to the above cuboid, cylinder, and the like, that is, the flange 2141 is not limited to the above quantity and shape, and the like. Certainly, the quantity of flanges 2141 may alternatively be different from the quantity of side plates 214 and is not limited herein. The flange 2141 is parallel to the top cover 24, which facilitates better fitting between the top cover 24 and the flange 2141.

By the above method, each side plate 214 is provided with a corresponding flange 2141, and the top cover 24 is connected to all flanges 2141, so that connection positions are all located on the flanges 2141, and protection performance for the bare cell 22 is improved.

According to some embodiments of the present application, an edge of the top cover 24 is aligned with an edge of the flange 2141 away from the side plate 214.

Specifically, after the top cover 24 is connected to the flange 2141, the edge of the top cover 24 and the edge of the flange 2141 away from the side plate 214 need to be cut to avoid protrusion of the edge of the top cover 24 and/or the edge of the flange 2141 away from the side plate 214.

By the above method, it is avoided that the top cover 24 and/or the flange 2141 pierces an adjacent battery cell 20 or a casing 10 of a battery 100; and moreover, the structure of the battery cell 20 is more compact, which facilitates subsequent series or parallel connections of a plurality of battery cells 20.

According to some embodiments of the present application, the housing 21 is an integrally formed structure.

Specifically, the bottom plate 213 and the side plate 214 are integrally formed. When there may be, but is not limited to, four side plates 214, the four side plates 214 and the bottom plate 213 are integrally formed and enclose to form the accommodating space 212. By the above method, the housing 21 is more stable, thereby improving stability of connecting the top cover 24 to the flange 2141 of the housing 21.

By the above method, the housing 21 is more stable, thereby improving stability of connecting the top cover 24 to the flange 2141 of the housing 21.

According to some embodiments of the present application, a maximum distance from the edge of the flange 2141 away from the side plate 214 to an outer surface of the side plate 214 is not greater than 5 mm.

Specifically, to facilitate connecting the top cover 24 to the flange 2141, a distance that the flange 2141 extends outward of the accommodating space 212 from one end of the side plate 214 away from the bottom plate 213 is increased, and a size of the top cover 24 can alternatively be increased to fit the flange 2141. Additionally, a maximum distance that the flange 2141 extends outward is limited, which reduces material costs and the like. A distance that the flange 2141 extends outward of the accommodating space 212 from one end of the side plate 214 away from the bottom plate 213 may be greater than 0 mm. A distance that the flange 2141 extends outward of the accommodating space 212 from one end of the side plate 214 away from the bottom plate 213 may be less than or equal to 10 mm. A distance that the flange 2141 extends outward of the accommodating space 212 from one end of the side plate 214 away from the bottom plate 213 is defined as L3, as shown in FIG. 13. L3 may include, but is not limited to, 10 mm, 9 mm, 7 mm, 5.5 mm, 5 mm, 4 mm, 3.4 mm, 2 mm, 1 mm, and the like.

After the top cover 24 is connected to the flange 2141, the edge of the top cover 24 and the edge of the flange 2141 away from the side plate 214 need to be cut, where an actual connection position W between the top cover 24 and the flange 2141 is prevented from cutting during a cutting process. A distance from the edge of the flange 2141 away from the side plate 214 to an outer surface of the side plate 214 is not greater than a predetermined threshold (not shown in the figure). That is, a cutting position is greater than or equal to the predetermined threshold position. This predetermined threshold can increase a distance between the connection position W and the bare cell 22, and reduce damage to the bare cell 22 due to laser spillage; and in addition, damage to the bare cell 22 caused by particulate matter falling into the bare cell 22 can be reduced, thereby protecting the bare cell 22.

The predetermined threshold may be 5 mm. The distance from the edge of the flange 2141 away from the side plate 214 to the outer surface of the side plate 214 may be, but is not limited to, 1 mm, 2.1 mm, 3 mm, 3.7 mm, 4 mm, 5 mm, and the like.

By the above method, the distance between an actual connection position of the flange 2141 and the top cover 24 and the bare cell 22 is limited, and damage to the bare cell 22 due to leakage of laser or falling of particulate matter is reduced.

According to some embodiments of the present application, one of a side of the flange 2141 facing the top cover 24 and a side of the top cover 24 facing the flange 2141 is provided with an alignment groove, the other is provided with an alignment portion, and the alignment portion is inserted into the alignment groove.

Specifically, the side of the flange 2141 facing the top cover 24 is provided with an alignment groove. The side of the top cover 24 facing the flange 2141 is provided with an alignment portion. When the top cover 24 is connected to the flange 2141, the alignment portion is inserted into the alignment groove. In this case, the top cover 24 and the flange 2141 fit closely.

Alternatively, a side of the flange 2141 facing the top cover 24 is provided with an alignment portion. A side of the top cover 24 facing the flange 2141 is provided with an alignment groove. When the top cover 24 is connected to the flange 2141, the alignment portion is inserted into the alignment groove. In this case, the top cover 24 and the flange 2141 fit closely.

By the above method, the alignment portion is inserted into and aligned with the alignment groove, the top cover 24 can be quickly positioned on the flange 2141, efficiency of installing the top cover 24 to the housing 21 is improved, thereby improving installation efficiency of the battery cell 20.

According to some embodiments of the present application, an edge of the flange 2141 away from the side plate 214 is connected to an edge of the top cover 24 by welding.

Specifically, a welding position is formed between the edge of the flange 2141 away from the side plate 214 and the edge of the top cover 24, where the welding position is the aforementioned connection position W. There is a spacing between the welding position and the bare cell 22, which avoids damage to the bare cell 22 due to welding laser or particulate matter. By the above method, the flange 2141 and the top cover 24 are welded and fixed, which is simple and easy to implement.

By the above method, the flange 2141 and the top cover 24 are welded and fixed, which is simple and easy to implement.

According to some embodiments of the present application, the present application further provides a battery 100, including the battery cell 20 according to any of the above embodiments. The battery 100 may be an energy storage apparatus and the like. An energy storage apparatus is a type of battery 100, which can be configured for power grids, or for household, commercial and other scenarios, to store and/or release electrical energy. The energy storage apparatus may be an energy storage cabinet, an energy storage container, or the like.

According to some embodiments of the present application, the present application further provides an electric apparatus, including the battery 100 according to any of the above embodiments, and the battery 100 is configured to supply power to the electric apparatus.

The electric apparatus may be a mobile phone, a computer, a vehicle, or any foregoing device or system using the battery 100.

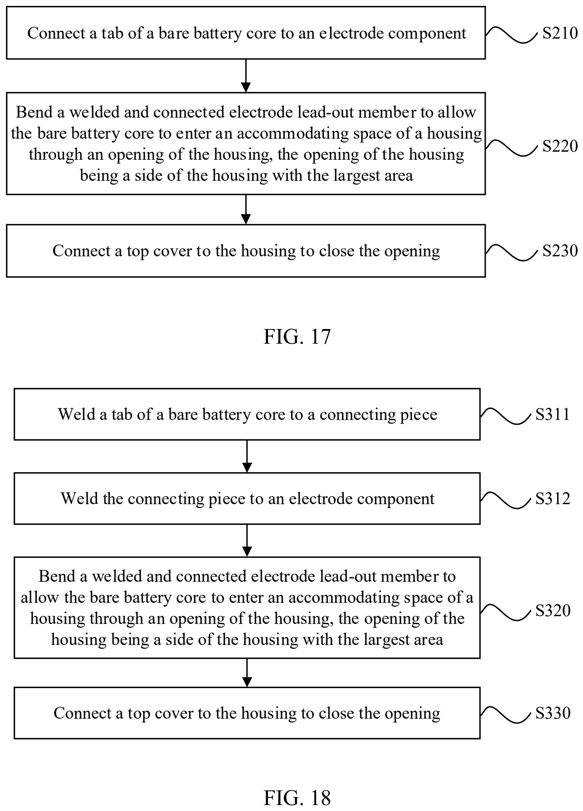

Referring to FIG. 16 to FIG. 18, FIG. 16 is a schematic flowchart according to one or more embodiments; FIG. 17 is another schematic flowchart according to one or more embodiments; and FIG. 18 is still another schematic flowchart according to one or more embodiments. According to some embodiments of the present application, the present application provides a method for manufacturing a battery cell 20. The method for manufacturing the battery cell 20 includes:
S110: Connect an electrode lead-out member 221 of a bare cell 22 to an electrode component 25.
S120: Bend the connected electrode lead-out member 221 to allow the bare cell 22 to enter an accommodating space 212 of a housing 21 through an opening 2121 of the housing 21, the opening 2121 of the housing 21 being a side of the housing 21 with the largest area.
S130: Connect a top cover 24 to the housing 21 to close the opening 2121.

Specifically, the electrode component 25 is disposed on the housing 21 and may be at least partially located in the accommodating space 212 of the housing 21. The electrode component 25 may be configured to electrically connect to the bare cell 22 for outputting or inputting electrical energy of the battery cell 20. In some embodiments, the electrode component 25 may include a positive electrode component 25 and a negative electrode component 25 for outputting a current and connecting to an external circuit. A method for connecting the electrode lead-out member 221 to the electrode component 25 may include laser welding, friction welding, ultrasonic welding, and the like. The electrode component 25 may include a pole and the like. The electrode lead-out member 221 may include a tab 2211, an adapter piece, and the like.

Before connection, the electrode lead-out member 221 of the bare cell 22 may be located on one side of the housing 21 and is located outside the accommodating space 212. After the electrode lead-out member 221 is connected to the electrode component 25, the electrode lead-out member 221 may be bent around a position between the bare cell 22 and the electrode component 25. A bending direction of the tab 2211 and/or the electrode component 25 is toward the accommodating space 212. One end of the tab 2211 connected to the bare cell 22 drives the bare cell 22 to move around a bending position. After the tab 2211 and/or the electrode component 25 is bent, the bare cell 22 fully enters the accommodating space 212 of the housing 21.

The opening 2121 may be located on a side of the housing 21 with the largest area. The top cover 24 may close the opening 2121 by covering. A method for connecting the top cover 24 to the housing 21 may include laser welding, tungsten inert gas welding, and the like. When the top cover 24 closes the opening 2121, the accommodating space 212 is isolated from an external environment.

By the above method, the bare cell 22 can form a stable electrical connection with the electrode component 25, and can be directly installed into the accommodating space 212 of the housing 21 by bending the electrode lead-out member 221. The bare cell 22 can be simply installed with the electrode component 25 disposed on the housing 21, and the battery cell 20 can be efficiently assembled.

According to some embodiments of the present application, the housing 21 includes a bottom plate 213 and a plurality of side plates 214, the side plates 214 extend along a periphery of the bottom plate 213 and form the accommodating space 212 together with the bottom plate 213, the opening 2121 is disposed opposite to the bottom plate 213, and the electrode component 25 is the bottom plate 213 or the side plate 214 of the housing 21.

Specifically, when the electrode component 25 is the bottom plate 213 or the side plate 214 of the housing 21, the tab 2211 is connected to the bottom plate 213 or the side plate 214. The side plate 214 may be disposed at an angle to the bottom plate 213, for example, at 90°. A quantity of the side plates 214 may be set according to actual conditions, for example, in this embodiment, there are four side plates 214. The accommodating space 212 is configured to accommodate the bare cell 22.

By the above method, the tab 2211 is directly connected to the bottom plate 213 or the side plate 214, a connection structure is simple, and production is facilitated. Additionally, the method further facilitates reducing structures between the bare cell 22 and the housing 21, and a volume proportion of the bare cell 22 in the accommodating space 212 is improved, thereby improving energy density of the battery cell 20.

According to some embodiments of the present application, the housing 21 includes a bottom plate 213 and a plurality of side plates 214. The side plates 214 extend along a periphery of the bottom plate 213 and form the accommodating space 212 together with the bottom plate 213. The opening 2121 is disposed opposite to the bottom plate 213, and the electrode component 25 is disposed on at least one side plate 214.

Specifically, the bottom plate 213 is a side of the housing 21 with the largest area. The side plate 214 may be disposed at an angle to the bottom plate 213, for example, at 90°. A quantity of the side plates 214 may be set according to actual conditions, for example, in this embodiment, there are four side plates 214. The accommodating space 212 is configured to accommodate the bare cell 22.

By the above method, the electrode component 25 is disposed on the side plate 214, which better facilitates a connection between the electrode component 25 and the tab 2211, and a structure of the battery cell 20 is simplified.

According to some embodiments of the present application, the electrode lead-out member 221 includes a tab 2211, and the step of connecting the electrode lead-out member 221 of the bare cell 22 to the electrode component 25 includes that:
S210: Weld the tab 2211 of the bare cell 22 to the electrode component 25.

By the above method, the tab 2211 may be conveniently connected to the electrode component 25 through the bare cell 22 to form a current loop.

According to some embodiments of the present application, the electrode lead-out member 221 includes a tab 2211 and a connecting piece 2212, and the step of connecting the electrode lead-out member 221 of the bare cell 22 to the electrode component 25 includes that:
S311: Weld the tab 2211 of the bare cell 22 to the connecting piece 2212.
S312: Weld the connecting piece 2212 to the electrode component 25.

Specifically, the connecting piece 2212 is made of a conductive material. One end of the connecting piece 2212 may be welded to the tab 2211 first, and then another end of it is welded to the electrode component 25. Alternatively, one end of the connecting piece 2212 may be welded to the electrode component 25 first, and then another end of it is welded to the tab 2211. In other words, order of S311 and S312 may be swapped. Shape of the connecting piece 2212 may be set according to actual conditions, for example, the connecting piece 2212 may be in a form of a thin sheet to facilitate better bending.

By the above method, the tab 2211 does not need to be directly connected to the electrode component 25, the tab 2211 may be connected to the electrode component 25 more flexibly, and the battery cell 20 is installed flexibly. Additionally, the connecting piece 2212 can share a tensile force between the tab 2211 and the electrode component 25, so that the tab 2211 is not easily broken.

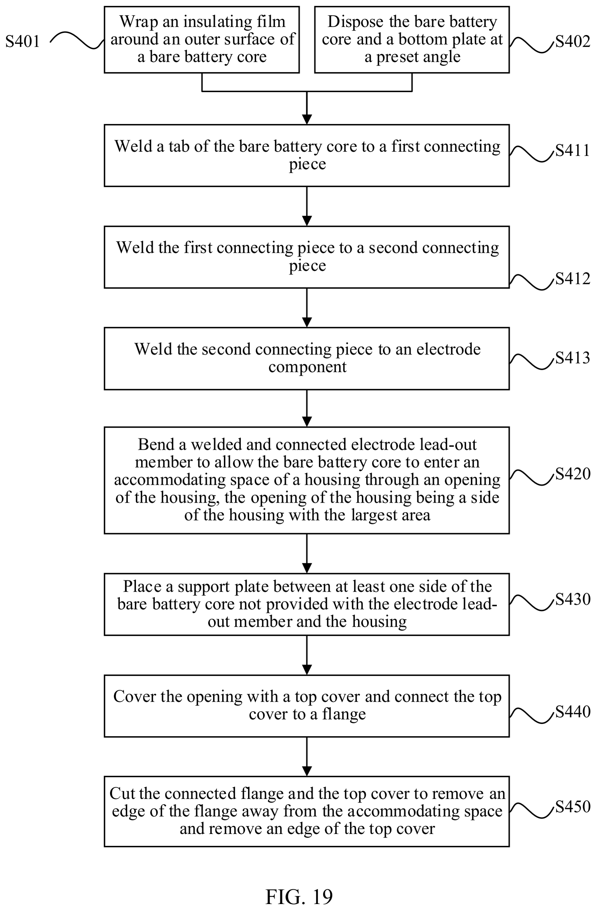

Refer to FIG. 19, which is yet another schematic flowchart according to one or more embodiments. In combination with FIG. 1 to FIG. 18, according to some embodiments of the present application, the electrode lead-out member 221 includes a tab 2211, a first connecting piece 2212c, and a second connecting piece 2212d, and the step of connecting the electrode lead-out member 221 of the bare cell 22 to the electrode component 25 includes that:
S411: Weld the tab 2211 of the bare cell 22 to the first connecting piece 2212c.
S412: Weld the first connecting piece 2212c to the second connecting piece 2212d.
S413: Weld the second connecting piece 2212d to the electrode component 25.

Specifically, the first connecting piece 2212c may be made of a conductive material. The second connecting piece 2212d may be made of a conductive material. Connecting order of the tab 2211, the first connecting piece 2212c, the second connecting piece 2212d, and the electrode component 25 may be adjusted according to actual conditions. For example, in a specific embodiment, the tab 2211 is welded to one end of the first connecting piece 2212c first. After the tab 2211 is welded to the one end of the first connecting piece 2212c, another end of the first connecting piece 2212c is welded to one end of the second connecting piece 2212d. After the one end of the second connecting piece 2212d is welded to the another end of the first connecting piece 2212c, the second connecting piece 2212d is welded to the electrode component 25. In other words, execution order of S411, S412, and S413 may be swapped, and may be executed in order of S411, S412, S413, or S412, S411, S413, or S413, S411, S412, or other execution order such as S411, S413, S412; S412, S413, S411; and S413, S412, S411. Alternatively, S411 and S413 may be executed simultaneously, and then followed by S412.

In another specific embodiment, the electrode component 25 may be welded to one end of the second connecting piece 2212d first. After the one end of the second connecting piece 2212d is welded to the electrode component 25, another end of the second connecting piece 2212d is welded to one end of the first connecting piece 2212c. After the another end of the second connecting piece 2212d is welded to the one end of the first connecting piece 2212c, another end of the first connecting piece 2212c is welded to the tab 2211.

In still another embodiment, one end of the first connecting piece 2212c is welded to one end of the second connecting piece 2212d first. After the one end of the first connecting piece 2212c is welded to the one end of the second connecting piece 2212d, another end of the first connecting piece 2212c is welded to the tab 2211. After the another end of the first connecting piece 2212c is welded to the tab 2211, another end of the second connecting piece 2212d is welded to the electrode component 25.

Shapes of the first connecting piece 2212c and the second connecting piece 2212d may be set according to actual conditions, for example, the first connecting piece 2212c may be in a form of a thin sheet to facilitate bending. The second connecting piece 2212d may be in a form of a thin sheet to facilitate bending.

By the above method, the tab 2211 is connected to the electrode component 25 through the first connecting piece 2212c and the second connecting piece 2212d, and the first connecting piece 2212c and the second connecting piece 2212d can better share the tensile force between the tab 2211 and the electrode component 25, so that the tab 2211 is not easily broken. Additionally, connection manners between the tab 2211 and the electrode component 25 can be performed by a plurality of steps, and the battery cell 20 is installed more flexibly.

According to some embodiments of the present application, the housing 21 includes a bottom plate 213, the opening 2121 is disposed opposite to the bottom plate 213, and before the step of connecting the electrode lead-out member 221 of the bare cell 22 to the electrode component 25, the method further includes that:
S402: Dispose the bare cell 22 and the bottom plate 213 at a preset angle P.

Specifically, the preset angle P refers to an included angle between the side of the bare cell 22 with the largest area and the bottom plate 213.

By the above method, the preset angle P enables the bare cell 22 and the electrode component 25 to have a better welding posture, so that welding quality between the bare cell 22 and the electrode component 25 is higher. Additionally, the preset angle P enables the bare cell 22 to be located at a position where bending is better facilitated, which improves efficiency of installing the bare cell 22 into the accommodating space 212.

According to some embodiments of the present application, before the step of connecting the tab 2211 of the bare cell 22 to the electrode component 25, the tab 2211 of the bare cell 22 may further be aligned with the electrode component 25, so that the tab 2211 of the bare cell 22 is located at a position where the tab 2211 can be connected to the electrode component 25.

By the above method, the connection between the tab 2211 and the electrode component 25 is better facilitated, which facilitates improving connection quality.

According to some embodiments of the present application, the preset angle P is not less than 45° and not greater than 135°. For example, 45°, 50°, 55°, 60°, 70°, 75°, 85°, 90°, 100°, 120°, 130°, and 135°.

By the above method, the bare cell 22 can have a better welding posture when welded to the electrode component 25, welding heat input is more uniform, base materials are more fully fused, probability of a cold solder joint is reduced, and welding seam quality is higher.

According to some embodiments of the present application, in the step of connecting the electrode lead-out member 221 of the bare cell 22 to the electrode component 25, the bare cell 22 is perpendicular to the bottom plate 213.

The bare cell 22 being perpendicular to the bottom plate 213 refers to an included angle between the side of the bare cell 22 with the largest area and the bottom plate 213 being 90°.

By the above method, the contact area between the bare cell 22 and the electrode component 25 is larger, a welding posture is good, welding heat input is more uniform, base materials are more fully fused, and welding seam quality is higher.

According to some embodiments of the present application, before the step of welding the top cover 24 to the housing 21 to close the opening 2121, the method further includes:
S330: Place a support plate 23 between at least one side of the bare cell 22 not provided with the electrode lead-out member 221 and the housing 21.

A quantity and a placement position of the support plate 23 may be set according to actual conditions. For example, in one embodiment, one support plate 23 is placed between the housing 21 and one side of the bare cell 22 disposed opposite to the side provided with the tab 2211. In still another embodiment, one support plate 23 is placed between the housing 21 and one side of the bare cell 22 adjacent to the side provided with the tab 2211. In yet another embodiment, one support plate 23 is placed between the housing 21 and one side of the bare cell 22 disposed opposite to the side provided with the tab 2211, and another support plate 23 is placed between the housing 21 and one side of the bare cell 22 adjacent to the side provided with the tab 2211.

A material of the support plate 23 may include plastic, resin, metal, and the like. The plastic may be polypropylene, polyethylene, and the like. Using a resin plastic material for the support plate 23 facilitates improving cushioning performance of the support plate 23, so that the bare cell 22 is difficult to damage due to collision with the support plate 23. Using a metal material for the support plate 23 can enhance a limiting capability of the support plate 23, which can better limit movement of the bare cell 22.

By the above method, the support plate 23 can fill the gap between the bare cell 22 and the side plate 214 of the housing 21, so as to reduce shaking of the bare cell 22 in the housing 21 and enable installation of the bare cell 22 to be more stable.

According to some embodiments of the present application, a side of the housing 21 facing the top cover 24 is provided with a flange 2141, the flange 2141 extends in a direction away from the accommodating space 212, and the step of connecting the top cover 24 to the housing 21 to close the opening 2121 includes that:
S340: Cover the opening 2121 with the top cover 24 and weld the top cover 24 to the flange 2141.

Specifically, the housing 21 may have a bottom plate 213 and four side plates 214. One side of the side plate 214 away from the bottom plate 213 is connected to the flange 2141. The flange 2141 and the side plate 214 may be independent components. Alternatively, the flange 2141 and the side plate 214 may be integrally formed. The flange 2141 extends from one end of the side plate 214 away from the bottom plate 213, and the flange 2141 extends outward from the accommodating space 212, so that the flange 2141 is located on an outer periphery of the side plate 214.

A shape of the flange 2141 may fit a shape of the top cover 24. For example, when the top cover 24 is a flat plate, the flange 2141 may be set as a flat plate parallel to the top cover 24. The top cover 24 may be connected to one end of the flange 2141 away from the housing 21.

By the above method, a distance between the connection position of the top cover 24 and the flange 2141 and the cell is increased, which facilitates reducing probability of damage to the cell due to light leakage during a connection process of the top cover 24 and the flange 2141. In addition, the damage to the cell caused by particulate matter falling into the cell can be reduced, thereby protecting the cell and improving reliability and safety of the battery cell 20.

According to some embodiments of the present application, after the step of covering the opening 2121 with the top cover 24 and welding the top cover 24 to the flange 2141, the method further includes that:
S350: Cut the welded flange 2141 and the top cover 24 to remove an edge of the flange 2141 away from the accommodating space 212 and remove an edge of the top cover 24.

Specifically, the edge of the flange 2141 away from the accommodating space 212 refers to a portion between a welding position of the flange 2141 with the top cover 24 and an edge of one end of the flange 2141 away from the accommodating space 212. When the edge of the flange 2141 away from the accommodating space 212 is removed, the above portion may be entirely removed, or the above portion may alternatively be partially removed.

The edge of the top cover 24 refers to a portion between a welding position of the top cover 24 with the flange 2141 and an edge of one end of the top cover 24 away from the accommodating space 212. When the edge of the top cover 24 is removed, the above portion may be entirely removed, or the above portion may alternatively be partially removed.

By the above method, space occupied by the flange 2141 and the top cover 24 can be reduced, thereby reducing space occupied by the battery cell 20.

According to some embodiments of the present application, before the step of welding the tab 2211 of the bare cell 22 to the electrode component 25, the method further includes that:

S401: Wrap an insulating film (not shown in the figure) around an outer surface of the bare cell 22.

Specifically, the material of the insulating film has insulating property. The insulating film is similar to plastic paper. The insulating film may completely wrap the outer surface of the bare cell 22. The insulating film may alternatively partially wrap the outer surface of the bare cell 22. For example, the insulating film wraps around the sides of the bare cell 22 other than the side provided with the tab 2211.

By the above method, the outer surface of the bare cell 22 has better insulation property, the insulating film protects the outer surface of the bare cell 22, and probability of scratches or damage to the bare cell 22 when installed into the housing 21 is reduced.

Finally, according to some embodiments of the present application, a method for manufacturing the battery cell 20 includes that: connect the electrode lead-out member 221 of the bare cell 22 to the electrode component 25; bend the connected electrode lead-out member 221 to allow the bare cell 22 to enter the accommodating space 212 of the housing 21 through the opening 2121, the opening 2121 of the housing 21 being a side with the largest area of the housing 21; and weld the top cover 24 to the housing 21 to close the opening 2121. By the above method, the bare cell 22 can form a stable electrical connection with the electrode component 25, and can be directly installed into the accommodating space 212 of the housing 21 by bending the electrode lead-out member 221. The bare cell 22 can be simply installed with the electrode component 25 disposed on the housing 21, and the battery cell 20 can be efficiently assembled.

Finally, it is to be noted that the above embodiments are only used for describing rather than limiting technical solutions of the present application. Although the present application has been described in detail with reference to the foregoing embodiments, those of ordinary skill in the art will understand that they can still modify the technical solutions described in the foregoing embodiments or make equivalent substitutions for some or all of the technical features. These modifications or substitutions do not make the essence of the corresponding technical solutions depart from the scope of the technical solutions of the embodiments of the present application, and are to be included within the scope of the claims and specification of the present application. In particular, as long as there is no structural conflict, various technical features mentioned in various embodiments can be combined in any manners. The present application is not limited to specific embodiments disclosed herein but includes all technical solutions falling within the scope of the claims.

## Claims

1. A battery cell, **characterized by** comprising a bare cell, a top cover, and a housing, the housing having an opening, the housing being connected to the top cover, the top cover covering the opening to form an accommodating space with the housing, the bare cell being disposed in the accommodating space, the opening being located on a side of the housing with the largest area, a side of the bare cell being provided with an electrode lead-out member, the housing comprising an electrode component or the housing being connected to an electrode component, the electrode lead-out member being connected to the electrode component, and the electrode lead-out member being a bent structure.

2. The battery cell according to claim 1, **characterized in that** the electrode lead-out member comprises a tab, the tab is disposed on one side of the bare cell, the tab is connected to the bare cell and the electrode component, and the tab is a bent structure.

3. The battery cell according to claim 1, **characterized in that** the electrode lead-out member comprises a tab and a connecting piece, the tab being disposed on one side of the bare cell, one end of the connecting piece being connected to the tab, another end of the connecting piece being connected to the electrode component, and the tab and/or the connecting piece being a bent structure.

4. The battery cell according to claim 3, **characterized in that** the connecting piece comprises a first connecting portion connected to the tab and a second connecting portion connected to the electrode component, the first connecting portion is bent relative to the second connecting portion, and the tab extends between the first connecting portion and the second connecting portion.

5. The battery cell according to claim 3, **characterized in that** the connecting piece comprises a first connecting piece and a second connecting piece, one end of the first connecting piece is connected to the tab, another end of the first connecting piece is connected to the second connecting piece, one end of the second connecting piece is connected to the first connecting piece, another end of the second connecting piece is connected to the electrode component, and at least one of the tab, the first connecting piece, and the second connecting piece is a bent structure.

6. The battery cell according to any one of claims 1 to 5, **characterized in that** the housing comprises a bottom plate and a plurality of side plates, the side plates extend along a periphery of the bottom plate and form the accommodating space together with the bottom plate, and at least one of the side plates is provided with the electrode component.

7. The battery cell according to claim 6, **characterized in that** a distance between the bare cell and the side plate of the housing not provided with the electrode component ranges from 0.5 mm to 2 mm.

8. The battery cell according to claim 6 or 7, **characterized in that** a support plate is disposed between the bare cell and the side plate of the housing not provided with the electrode component.

9. The battery cell according to claim 8, **characterized in that** the support plate comprises a bottom support plate, and the bottom support plate is disposed between the bare cell and the side plate of the housing opposite to the side plate provided with the electrode component.

10. The battery cell according to claim 8 or 9, **characterized in that** the support plate comprises a side support plate, and the side support plate is disposed between the bare cell and the side plate of the housing adjacent to the side plate provided with the electrode component.

11. The battery cell according to any one of claims 1 to 10, **characterized in that** the housing comprises a bottom plate and a plurality of side plates, the side plates extend along a periphery of the bottom plate and form the accommodating space together with the bottom plate, one side of the side plate away from the bottom plate is connected to a flange, the flange extends from one end of the side plate away from the bottom plate outward of the accommodating space, and the top cover is connected to the flange.

12. The battery cell according to claim 11, **characterized in that** the side plate is connected to the bottom plate through a first transition angle, and the side plate is connected to the flange through a second transition angle.

13. The battery cell according to claim 12, **characterized in that** a radius of the second transition angle is less than or equal to 0.2 mm.

14. The battery cell according to any one of claims 11 to 13, **characterized in that** the side plates are arranged around the bottom plate, the flanges are arranged around the side plates, and the flanges are connected to the top cover.

15. The battery cell according to any one of claims 11 to 14, **characterized in that** an edge of the top cover is aligned with an edge of the flange away from the side plate.

16. The battery cell according to any one of claims 11 to 15, **characterized in that** the housing is an integrally formed structure.

17. The battery cell according to any one of claims 11 to 16, **characterized in that** a maximum distance from the edge of the flange away from the side plate to an outer surface of the side plate is not greater than 5 mm.

18. A battery, **characterized by** comprising the battery cell according to any one of claims 1 to 17.

19. An electric apparatus, **characterized by** comprising the battery according to claim 18, the battery is configured to supply power to the electric apparatus.

20. A method for manufacturing a battery cell, **characterized by** comprising:
connecting an electrode lead-out member of a bare cell to an electrode component;
bending the connected electrode lead-out member to allow the bare cell to enter an accommodating space of a housing through an opening, the opening of the housing being a side of the housing with the largest area; and
connecting a top cover to the housing to close the opening.

21. The method for manufacturing a battery cell according to claim 20, **characterized in that** the housing comprises a bottom plate and a plurality of side plates, the side plates extend along a periphery of the bottom plate and form the accommodating space together with the bottom plate, the opening is disposed opposite to the bottom plate, and the electrode component is the bottom plate or the side plate of the housing.

22. The method for manufacturing a battery cell according to claim 20, **characterized in that** the housing comprises a bottom plate and a plurality of side plates, the side plates extend along a periphery of the bottom plate and form the accommodating space together with the bottom plate, the opening is disposed opposite to the bottom plate, and the electrode component is disposed on at least one of the side plates.

23. The method for manufacturing a battery cell according to any one of claims 20 to 22, **characterized in that** the electrode lead-out member comprises a tab, and the step of connecting the electrode lead-out member of the bare cell to the electrode component comprises:
welding the tab of the bare cell to the electrode component.

24. The method for manufacturing a battery cell according to any one of claims 20 to 22, **characterized in that** the electrode lead-out member comprises a tab and a connecting piece, and the step of connecting the electrode lead-out member of the bare cell to the electrode component comprises:
welding the tab of the bare cell to the connecting piece; and
welding the connecting piece to the electrode component.

25. The method for manufacturing a battery cell according to any one of claims 20 to 24, **characterized in that** the electrode lead-out member comprises a tab, a first connecting piece, and a second connecting piece, and the step of connecting the electrode lead-out member of the bare cell to the electrode component comprises:
welding the tab of the bare cell to the first connecting piece;
welding the first connecting piece to the second connecting piece; and
welding the second connecting piece to the electrode component.

26. The method for manufacturing a battery cell according to any one of claims 20 to 25, **characterized in that** the housing comprises a bottom plate, the opening is disposed opposite to the bottom plate, and before the step of connecting the electrode lead-out member of the bare cell to the electrode component, the method further comprises a step of:
disposing the bare cell and the bottom plate at a preset angle.

27. The method for manufacturing a battery cell according to claim 26, **characterized in that** the preset angle is not less than 45° and is not greater than 135°.

28. The method for manufacturing a battery cell according to claim 26 or 27, **characterized in that** in the step of connecting the electrode lead-out member of the bare cell to the electrode component, the bare cell is perpendicular to the bottom plate.

29. The method for manufacturing a battery cell according to any one of claims 20 to 28, **characterized in that** before the step of connecting the top cover and the housing to close the opening, the method further comprises a step of: placing a support plate between at least one side of the bare cell not provided with the electrode lead-out member and the housing.

30. The method for manufacturing a battery cell according to any one of claims 20 to 29, **characterized in that** a side of the housing facing the top cover is provided with a flange, the flange extends in a direction away from the accommodating space, and the step of connecting the top cover to the housing to close the opening comprises:
covering the opening with the top cover and welding the top cover to the flange.

31. The method for manufacturing a battery cell according to claim 30, **characterized in that** after the step of covering the opening with the top cover and welding the top cover to the flange, the method further comprises a step of:
cutting the welded flange and the top cover to remove an edge of the flange away from the accommodating space and remove an edge of the top cover.

32. The method for manufacturing a battery cell according to any one of claims 20 to 31, **characterized in that** before the step of connecting the electrode lead-out member of the bare cell to the electrode component, the method further comprises a step of:
wrapping an insulating film around an outer surface of the bare cell.
